# EUROPEAN PATENT SPECIFICATION

(11) **EP 1 292 414 B1**
(45) Date of publication and mention of the grant of the patent: **14.12.2005**
(21) Application number: 01940874.9
(22) Date of filing: 13.06.2001
(51) Int. Cl.: B22F 7/06, C22C 26/00

(54) **COMPOSITE DIAMOND COMPACTS**
VERBUNDDIAMANTKÖRPER
BRIQUETTES DE DIAMANT COMPOSITES

(30) Priority: 13.06.2000 ZA 200002967
(43) Date of publication of application: 19.03.2003
(73) Proprietor: ELEMENT SIX (PTY) LTD, 1559 Springs (ZA)
(72) Inventor: TANK, Klaus, 2007 Essexwold (ZA)
(74) Representative: Carpmaels & Ransford
(86) International application number: PCT/IB2001/001023
(87) International publication number: WO 2001/096050

(56) References cited:
- US-A- 4 411 672
- DATABASE WPI Section Ch, Week 198706 Derwent Publications Ltd., London, GB; Class M23, AN 1987-039165 XP002186323 & JP 61 293705 A (MITSUBISHI METAL CORP), 24 December 1986 (1986-12-24)
- DATABASE CA [Online] CHEMICAL ABSTRACTS SERVICE, COLUMBUS, OHIO, US; NAKAMURA, TSUTOMU ET AL: "Sintering of diamond tool for cutting or rock drilling" retrieved from STN Database accession no. 111:119434 CA XP002186322 & JP 01 015343 A (SUMITOMO ELECTRIC INDUSTRIES, LTD., JAPAN) 19 January 1989 (1989-01-19)
- PATENT ABSTRACTS OF JAPAN vol. 004, no. 111 (M-025), 9 August 1980 (1980-08-09) & JP 55 070502 A (SUMITOMO ELECTRIC IND LTD), 28 May 1980 (1980-05-28)

## Description

### BACKGROUND OF THE INVENTION

This invention relates to composite diamond compacts.

Diamond compacts, also known as polycrystalline diamond or PCD, are well known in the art and are used extensively in cutting, milling, drilling and other abrasive operations. Diamond compacts are polycrystalline in nature and contain a high diamond content. Diamond compacts may be produced without the use of a second or bonding phase, but generally contain such a phase. When such a phase is present, the dominant component of the phase is generally a diamond catalyst/solvent such as cobalt, nickel or iron or a combination thereof.

Diamond compacts are manufactured under elevated temperature and pressure conditions, i.e. conditions similar to those which are used for the synthesis of diamond.

Diamond compacts tend to be brittle and so in use they are usually bonded to a substrate, the substrate generally being a cemented carbide substrate. Bonding of the diamond compact to the substrate will generally take place during the manufacture of the compact itself. Diamond compacts bonded to a substrate are known as composite diamond compacts.

US-A-4 411 672 discloses a composite diamond compact made by high temperature and high pressure treating an aggregate filling of a soft sintered WC-Co substrate, an interlayer of Kovar (Fe-Ni-Co) alloy and outer layer of diamond powder. The kovar alloy is melted during the treatment and bonds the diamond powder.

Composite diamond compacts are used in a variety of applications and, in particular, in drilling applications. The bonding phase for such composite diamond compacts is generally cobalt. Cobalt undergoes a phase transformation at temperatures above about 400°C. This gives rise to problems in the use of composite diamond compacts in drilling applications where temperatures of the order of 700°C or higher are encountered at the cutting edge of such compacts. The phase transformation of the cobalt at these temperatures results in thermal fatigue craze cracking and snake skin cracking of the composite compacts during drilling applications.

### SUMMARY OF THE INVENTION

According to the present invention, a composite diamond compact comprises a diamond compact bonded to a cemented carbide substrate, the diamond compact comprising a polycrystalline bonded mass of diamond crystals present in an amount of at least 80 percent by volume of the compact and a second phase consisting essentially of a binary nickel/cobalt alloy, and the cemented carbide substrate comprising a mass of carbide particles bonded into a coherent form by means of a binder consisting essentially of a binary nickel/cobalt alloy, wherein the mass ratio of nickel to cobalt in the binary nickel/cobalt alloy is in the range of 75:25 to 20:80.

Further according to the invention, there is provided the use of a composite diamond compact as described above in the abrasive applications where temperatures in excess of 500°C are encountered at a cutting edge provided on the compact.

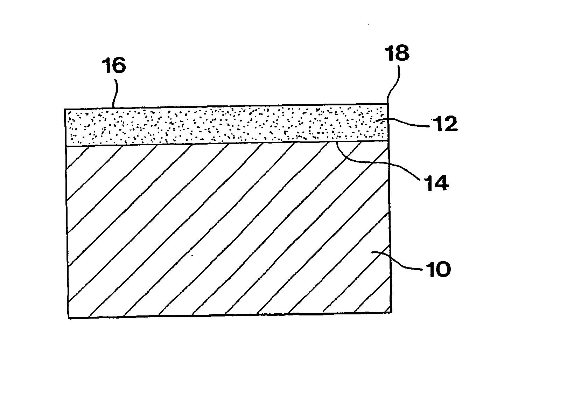

### BRIEF DESCRIPTION OF THE DRAWING

The drawing is a sectional side view of an embodiment of a composite diamond compact of the invention.

### DESCRIPTION OF EMBODIMENTS

The composite diamond compact of the invention is characterised by the alloy which is present in the diamond compact and in the cemented carbide substrate. The alloy in both layers consists essentially of a nickel/cobalt alloy. This means that the components of the alloy will consist essentially of nickel and cobalt with other components being present in trace or minor amounts only. It has been found that a composite diamond compact of this nature has a significantly lower tendency to failure through delamination than prior art composite diamond compacts. Braze delamination occurs when composite abrasive compacts are brazed into drill bits. The typical braze alloys used are zinc containing alloys. Zinc corrosion attack of cobalt binder in the substrate together with residual stresses in the substrate causes delamination cracking during the bit brazing process. Further, the presence of nickel increases significantly the thermal fatigue resistance of the compact and reduces the tendency for snake skin cracking to occur during operations such as drilling where temperatures of the order of 700°C or higher are encountered.

Thus, the invention also provides the use of a composite abrasive compact in abrasive applications where temperatures in excess of 500°C are encountered at a cutting edge of the compact. The cutting edge will generally be provided by the peripheral edge of the diamond compact. The abrasive applications may be cutting, drilling, milling or the like.

A mass ratio of nickel to cobalt in the alloy ranges from 75:25 to 20:80 and preferably in the range 30:70 to 45:55. A typical example of an alloy is one containing a mass ratio of nickel to cobalt of 40:60. The carbide particles of the substrate may be tungsten carbide particles, tantalum carbide particles, titanium carbide particles, molybdenum carbide particles or a mixture containing two or more of such particles.

The composite diamond compact of the invention may be made by methods known in the art. More particularly, a mass of diamond particles may be placed on a surface of a cemented carbide substrate forming an unbonded assembly which is then subjected to diamond synthesis conditions. The alloy from the substrate infiltrates the diamond mass forming a diamond compact which bonds to the substrate. In one preferred form of the invention, a recess is formed in the cemented carbide substrate and the mass of diamond particles is placed in the recess. After formation of the diamond compact, the sides of the substrate may be removed to expose the diamond compact. The diamond synthesis conditions will typically be a pressure of 40 to 70 kilobars (4 to 7 GPa) and a temperature of 1300 to 1600°C. These conditions will typically be maintained for a period of 20 to 60 minutes.

An embodiment of the invention will now be described. A cylindrical cemented carbide substrate was provided. The substrate comprised a mass of tungsten carbide particles bonded into a coherent form by means of a nickel/cobalt alloy. The mass ratio of the nickel to cobalt in the alloy was 40:60.

A recess was formed in one flat end surface of the substrate. A mass of diamond particles was placed in the recess and filled the recess. This unbonded assembly was placed in the reaction zone of a conventional high temperature/high pressure apparatus and subjected to a temperature of about 1500°C and a pressure of about 55 kilobars (5,5 GPa). These conditions were maintained for a period sufficient to produce a diamond compact of the diamond particles. During the formation of the compact, nickel/cobalt alloy from the substrate infiltrated the diamond mass and formed a second phase for the diamond compact. The diamond compact was bonded to the cemented carbide body.

The resulting product was removed from the apparatus and the sides of the cemented carbide substrate removed. The resulting product is illustrated by the accompanying drawing and consisted of a diamond compact 12 bonded to a cemented carbide substrate 10 along interface 14. The diamond compact 92 had a second phase consisting essentially of a nickel/cobalt alloy and the cemented carbide substrate 10 had a binder consisting essentially of the same alloy. The diamond compact 12 has an upper working surface 16 and a peripheral cutting edge 18.

The composite abrasive compact illustrated by the drawing may be used as a drill insert. In use, the cutting edge 18 performs a cutting action in drilling and in hard rocks temperatures in excess of 500°C are encountered. Due to the presence of the nickel/cobalt alloy in both the diamond compact and in the cemented carbide substrate, the thermal fatigue resistance of the composite compact is increased and there is reduction in the tendency for snake skin cracking to occur, as is a common problem with prior art composite compacts using cobalt as the binder alloy.

## Claims

1. A composite diamond compact comprising a diamond compact bonded to a cemented carbide substrate, the diamond compact comprising a polycrystalline bonded mass of diamond crystals present in an amount of at least 80 percent by volume of the compact and a second phase consisting, apart from impurities, of a nickel/cobalt alloy, the cemented carbide substrate comprising a mass of carbide partides bonded into a coherent form by means of a binder consisting apart from impurities, of a nickel/cobalt alloy, wherein the mass ratio of nickel to cobalt in the nickel/cobalt alloy is in the range 75:25 to 20:80.

2. A composite diamond compact according to claim 1 wherein the mass ratio of nickel to cobalt in the nickel/cobalt alloy is in the range 30:70 to 45:55.

3. A composite diamond compact according to claim 1 wherein the mass ratio of nickel to cobalt in the nickel/cobalt alloy is 40:60.

4. A composite diamond compact according to any one of the preceding claims wherein the carbide particles of the substrate are selected from tungsten carbide particles, tantalum carbide particles, titanium carbide particles, molybdenum carbide particles and a mixture containing two or more of such particles.

5. Use of a composite diamond compact according to any one of the preceding claims in an abrasive application where a temperature in excess of 500°C is encountered at a cutting edge provided on the diamond compact.

## Patentansprüche

1. Diamantkompositpressling, umfassend einen Diamantpressling, gebunden an ein zementiertes Carbidsubstrat, wobei der Diamantpressling eine polykristalline gebundene Masse von Diamantkristallen umfasst, welche in einer Menge von wenigstens 80 % des Volumens des Presslings vorliegt, und eine zweite Phase, welche abgesehen von Verunreinigungen aus einer Nickel-/Kobaltlegierung besteht, wobei das zementierte Carbidsubstrat eine Masse an Carbidpartikeln umfasst, die in eine kohärente Form mittels eines Bindemittels gebunden sind, das abgesehen von Verunreinigungen aus einer Nickel-/Kobaltlegierung besteht, worin das Masseverhältnis von Nickel zu Kobalt derart ist, dass die Nickel- Kobaltlegierung im Bereich von 75:25 bis 20:80 ist.

2. Diamantkompositpressling nach Anspruch 1, worin das Masseverhältnis von Nickel zu Kobalt in der Nickel-/Kobaltlegierung im Bereich von 30:70 bis 45:55 ist.

3. Diamantkompositpressling nach Anspruch 1, worin das Masseverhältnis von Nickel zu Kobalt in der Nickel-/Kobaltlegierung 40:60 ist.

4. Diamantkompositpressling nach einem der vorhergehenden Ansprüche, worin die Carbidpartikel des Substrats gewählt sind unter Wolframcarbidpartikeln, Tantalcarbidpartikeln, Titancarbidpartikeln, Molybdäncarbidpartikeln und einem Gemisch, das zwei oder mehr solcher Partikel enthält.

5. Verwendung eines Diamantkompositpresslings nach einem der vorhergehenden Ansprüche in einer Verschleißschutzanwendung, worin eine Temperatur von mehr als 500°C an einem Schneidende angetroffen wird, das an dem Diamantpressling vorgesehen ist.

## Revendications

1. Comprimé de diamant composite comprenant un comprimé de diamant lié à un substrat de carbure cémenté, le comprimé de diamant comprenant une masse polycristalline liée de cristaux de diamant présente en une quantité d'au moins 80 pour cent en volume du comprimé et une seconde phase constituée, à part des impuretés, d'un alliage de nickel et de cobalt, le substrat de carbure cémenté comprenant une masse de particules de carbure liées en une forme cohérente au moyen d'un liant constituée, à part des impuretés, d'un alliage de nickel et de cobalt, dans lequel le rapport en masse du nickel sur le cobalt dans l'alliage de nickel et de cobalt se trouve dans la fourchette de 75/25 à 20/80.

2. Comprimé de diamant composite selon la revendication 1, dans lequel le rapport en masse du nickel sur le cobalt, dans l'alliage de nickel et de cobalt, se trouve dans la fourchette de 30/70 à 45/55.

3. Comprimé de diamant composite selon la revendication 1, dans lequel le rapport en masse du nickel sur le cobalt, dans l'alliage de nickel et de cobalt, est 40/60.

4. Comprimé de diamant composite selon l'une quelconque des revendications précédentes, dans lequel les particules de carbure du substrat sont choisies parmi les particules de carbure de tungstène, les particules de carbure de tantale, les particules de carbure de titane, les particules de carbure de molybdène et un mélange contenant deux, ou plusieurs, de ces particules.

5. Utilisation d'un comprimé de diamant composite selon l'une quelconque des revendications précédentes dans une application abrasive, lorsqu'une température supérieure à 500°C est rencontrée au niveau d'un bord d'attaque fourni sur le comprimé de diamant.
